(19) Europäisches Patentamt
European Patent Office
Office européen des brevets

(11) Veröffentlichungsnummer: **0 005 451**
**A2**

(12) # EUROPÄISCHE PATENTANMELDUNG

(21) Anmeldenummer: **79101107.5**

(22) Anmeldetag: **11.04.79**

(51) Int. Cl.[2]: **C 09 B 19/00**
C 07 D 265/38, D 06 P 1/41

(30) Priorität: **21.04.78 CH 4329/78**

(43) Veröffentlichungstag der Anmeldung:
**28.11.79 Patentblatt 79/24**

(84) Benannte Vertragsstaaten:
**CH DE FR GB**

(71) Anmelder: **CIBA-GEIGY AG**
**Patentabteilung Postfach**
**CH-4002 Basel(CH)**

(72) Erfinder: **Loew, Peter, Dr.**
**Concordiastrasse 23**
**CH-4142 Münchenstein(CH)**

(72) Erfinder: **Zink, Rudolf**
**Alemannenstrasse 2**
**CH-4106 Therwil(CH)**

(54) **Verfahren zur Herstellung von kationischen Oxazinverbindungen, die Oxazinverbindungen sowie deren Verwendung zum Färben und Bedrucken von Textilmaterialien.**

(57) Beschrieben wird ein Verfahren zur Herstellung von kationischen Oxazinverbindungen der Formel I

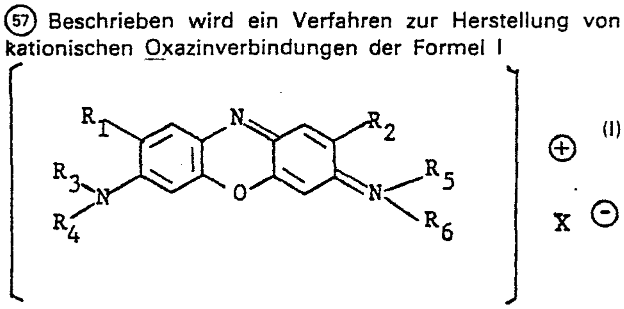

(I)

worin bedeutet:

$R_1$ und $R_2$ unabhängig voneinander Wasserstoff, eine Alkylgruppe mit 1 bis 4 Kohlenstoffatomen oder eine Alkoxygruppe mit 1 bis 4 Kohlenstoffatomen;

$R_3$ und $R_5$ unabhängig voneinander Wasserstoff, eine Alkylgruppe mit 1 bis 4 Kohlenstoffatomen, die gegebenenfalls substituiert ist durch CN, OH, Aryl, Halogen oder eine Alkoxygruppe, eine Alkenylgruppe mit 2 bis 4 Kohlenstoffatomen;

$R_4$ und $R_6$ unabhängig voneinander eine Alkylgruppe mit 1 bis 4 Kohlenstoffatomen, die gegebenenfalls substituiert ist durch CN, OH, Aryl, Halogen oder eine Alkoxygruppe, oder eine Alkenylgruppe mit 2 bis 4 Kohlenstoffatomen; oder eine unsubstituierte Phenylgruppe oder eine Phenylgruppe die ein- oder mehrmals substituiert ist durch eine Alkylgruppe mit 1 bis 4 Kohlenstoffatomen, eine Alkoxygruppe mit 1 bis 4 Kohlenstoffatomen oder Halogen, und

X ein Anion, dadurch gekennzeichnet, dass man eine Verbindung der Formel II

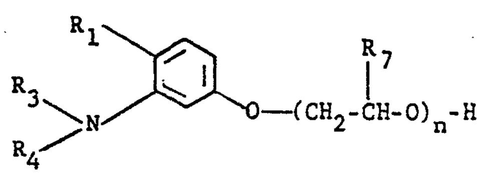

(II)

worin die Symbole $R_1$, $R_3$ und $R_4$ die unter Formel I angegebene Bedeutung haben und $R_7$ Wasserstoff, den Methyl- oder Aethylrest und n die Zahlen 1 oder 2 bedeutet in Gegenwart einer Säure HX nitrosiert, das Nitrosierungsprodukt gegebenenfalls isoliert und anschliessend mit einer Verbindung der Formel III

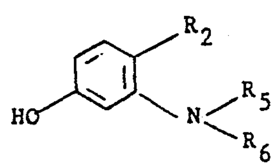

(III)

worin die Symbole $R_2$, $R_5$ und $R_6$ die unter Formel I angegebene Bedeutung haben in Gegenwart von Schwermetallsalzen gegebenenfalls in Mischung mit einem basischen Metallsalz, kondensiert, wobei sich intermediär wasserunlösliche lineare Metallkomplexe aus dem eingesetzten Schwermetall und dem linearen Kondensationsprodukt aus der vom Aminophenoläther der Formel II erhaltenen Nitrosoverbindung und der Verbindung der Formel III bilden, welche isoliert werden können.



Croydon Printing Company Ltd.

1-11681*

BEZEICHNUNG GEÄNDERT
siehe Titelseite

Verfahren zur Herstellung von kationischen Oxazinverbindungen

Die Erfindung betrifft ein Verfahren zur Herstellung von kationischen Oxazinverbindungen der Formel I

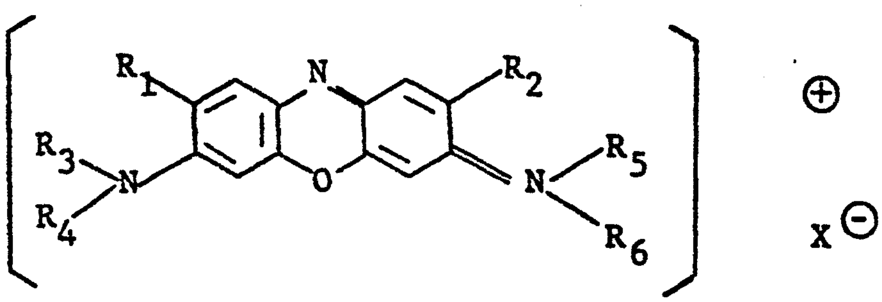

(I)

worin bedeutet:

$R_1$ und $R_2$ unabhängig voneinander Wasserstoff, eine Alkylgruppe mit 1 bis 4 Kohlenstoffatomen oder eine Alkoxygruppe mit 1 bis 4 Kohlenstoffatomen;

$R_3$ und $R_5$ unabhängig voneinander Wasserstoff, eine Alkylgruppe mit 1 bis 4 Kohlenstoffatomen, die gegebenenfalls substituiert ist durch CN, OH, Aryl, Halogen oder eine Alkoxygruppe, eine Alkenylgruppe mit 2 bis 4 Kohlenstoffatomen;

$R_4$ und $R_6$ unabhängig voneinander eine Alkylgruppe mit 1 bis 4 Kohlenstoffatomen, die gegebenenfalls substituiert ist durch CN, OH, Aryl, Halogen oder eine Alkoxygruppe, oder eine Alkenylgruppe mit 2 bis 4 Kohlenstoffatomen; oder eine unsubstituierte Phenylgruppe oder eine Phenylgruppe die ein- oder mehrmals substituiert ist durch Alkylgruppen mit 1 bis 4 Kohlenstoffatomen, Alkoxygruppen mit 1 bis 4 Kohlenstoffatomen oder Halogen, und

X ein Anion, dadurch gekennzeichnet, dass man eine Verbindung der Formel II

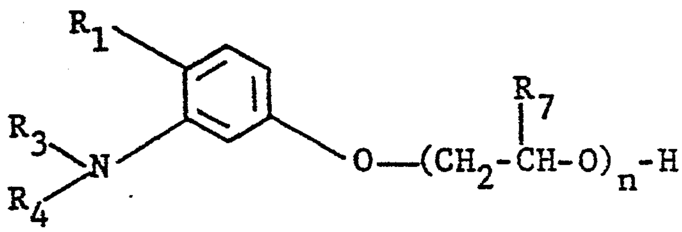

(II)

worin die Symbole $R_1$, $R_3$ und $R_4$ die unter Formel I angegebene Bedeutung haben und $R_7$ Wasserstoff, den Methyl- oder Aethylrest und n die Zahlen 1 oder 2 bedeutet in Gegenwart einer das Anion $X^{\ominus}$ liefernden Säure HX nitrosiert, das Nitrosierungsprodukt gegebenenfalls isoliert und mit einer Verbindung der Formel III

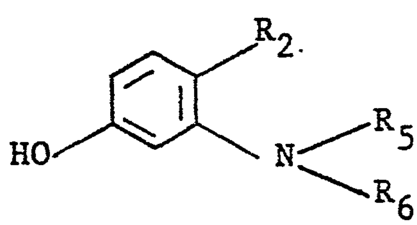

(III)

worin die Symbole $R_2$, $R_5$ und $R_6$ die unter Formel I angegebene Bedeutung haben, in Gegenwart von Schwermetallsalzen gegebenenfalls in Mischung mit einem basischen Metallsalz, kondensiert.

$R_1$ und $R_2$ in der Bedeutung einer Alkylgruppe mit 1 bis 4 Kohlenstoffatomen bedeutet beispielsweise eine unverzweigte oder verzweigte Alkylgruppe wie die Methyl-, Aethyl-, n - oder iso -Propyl-, n - oder sec - oder tert. Butyl-Gruppe. $R_1$ und $R_2$ in der Bedeutung einer Alkoxygruppe stellt z.B. die Methoxy-, Aethoxy-, Propoxy- oder Butoxygruppe dar. In bevorzugten Oxazinverbindungen bedeutet $R_1$ und $R_2$ unabhängig voneinander Wasserstoff oder Methyl.

$R_3$, $R_4$, $R_5$ und $R_6$ in der Bedeutung einer Alkylgruppe stellen ebenfalls eine unverzweigte oder verzweigte Alkylgruppe dar, wie z.B. die Methyl-, Aethyl, n - oder iso-Propyl, n -, sec - oder tert. Butylgruppe, welche Alkylgruppen noch definitionsgemäss weitersubstituiert sein können; derartig substituierte Alkylgruppen sind beispielsweise β-Cyanäthyl, β-Hydroxyäthyl, β-Hydroxypropyl, γ-Hydroxypropyl, β,γ-Dihydroxypropyl, Phenylmethyl, Phenyläthyl, β-Chloräthyl, β-Chlorpropyl, Methoxymethyl, Aethoxymethyl oder Methoxyäthyl. Als Alkenylgruppen in der Bedeutung von $R_3$, $R_4$, $R_5$ und $R_6$ sind z.B. genannt: die Aethylengruppe, die Propylengruppe und die Butylengruppe. $R_4$ und $R_6$ in der Bedeutung einer definitionsgemäss substituierten Phenylgruppe bedeutet z.B. Methylphenyl, Dimethylphenyl, Aethylphenyl, Chlorphenyl oder Methoxyphenyl. In bevorzugten Oxazinverbindungen bedeutet $R_3$ und $R_4$ unabhängig voneinander Methyl oder Aethyl; $R_5$ Wasserstoff, Methyl oder Aethyl; und $R_6$ Phenyl, Methylphenyl, Dimethylphenyl oder Aethylphenyl.

Als Anionen X kommen alle die für kationische Verbindungen üblichen organischen und anorganischen Anionen in Betracht. Es handelt sich z.B. um Halogen, wie Chlorid-, Bromid- oder

Jodid-, ferner Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, 4-Chlorbenzolsulfonat-, Naphthalinsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Die Nitrosierung der Aminophenoläther der Formel II erfolgt in wässeriger Lösung oder in einem wasserlöslichen organischen Lösungsmittel wie Methanol oder Aethanol in Gegenwart einer Säure HX mit Natriumnitrit bei einer Temperatur von etwa 0 bis 50°C. Bei der Säure HX handelt es sich z.B. um eine organische Säure wie Essigsäure oder Arylsulfonsäure , vorallem Benzolsulfonsäure, oder um eine anorganische Säure, wie Salzsäure, Schwefelsäure oder Phosphorsäure. Die Aminophenoläther der Formel II sind bekannt, z.B. aus der DOS 26 31 166. In Frage kommen z.B.

3- (β-Hydroxyäthoxy) - diphenylamin
3- (β-Hydroxyäthoxy) - N - methyl-diphenylamin
3- (β-Hydroxyäthoxy) - N - (2'-methyl) - diphenylamin
3- (β-Hydroxyäthoxy) - N - (4'-methyl) - diphenylamin
3- (β-Hydroxyäthoxy) - N - (2',3'-dimethyl) -diphenylamin
3- (β-Hydroxyäthoxy) - N - (2',4'-dimethyl) -diphenylamin
3- (β-Hydroxyäthoxy) - N - methyl - (4'-methyl)-diphenylamin
3- (β-Hydroxyäthoxy) - N - äthyl-diphenylamin
3- (β-Hydroxyäthoxy) - N - äthyl (4'-methyl)-diphenylamin
3- (β-Hydroxyäthoxy) - N - (β-Cyanäthyl)-anilin
3- (β-Hydroxyäthoxy) - N - allylanilin.

Die erhaltenen Nitrosoverbindungen besitzen gute Wasserlöslichkeit, ihre Salze sind isolierbar, können aber, nach Neutralisation z.B. mit Zinkoxid, direkt zur Kondensation mit den Verbindungen der Formel III eingesetzt werden.

Die Kondensation der aus den Aminophenoläthern der Formel II erhaltenen Nitrosoverbindungen mit den Verbindungen der Formel III erfolgt in Gegenwart von Schwermetallsalzen gegebenenfalls in Mischung mit basischen Metallsalzen. Als Schwermetallsalze kommen z.B. in Frage die Halogenide, Carbonate, Bicarbonate, Nitrate, Sulfate, Hydroxyde und Oxyde von Aluminium-, Titan-, Zinn-, Mangan-, Kupfer und insbesondere Zink- und Eisen. Namentlich genannt ist z.B. Zinkchlorid und Zinkoxyd.

Als basische Metallsalze, die der Kondensation zugesetzt werden können,seien beispielsweise genannt: Die Hydroxyde, Carbonate, Bicarbonate und Oxyde von Lithium, Natrium, Kalium, Zink, Magnesium und Eisen. Genannt sind z.B. Natriumcarbonat, Natriumbicarbonat, Magnesiumcarbonat und insbesondere basische Zinksalze wie Zinkoxid und basisches Zinkcarbonat.

Bevorzugt sind Metallsalzmischungen aus einem Schwermetallsalz wie einem Zinksalz oder Eisensalz und einem basischen Metallsalz, wie einem basischen Alkali- oder Erdalkalisalz wie einem Natrium- oder Kaliumsalz. Als besonders interessante Metallsalzmischungen sind z.B.genannt: Zinkchlorid und ein basisches Alkali oder Erdalkalisalz, oder Zinkchlorid und Zinkoxid, oder Zinkchlorid und Natriumcarbonat.

Die Kondensationsreaktion wird in einem wasserlöslichen organischen Lösungsmittel gegebenenfalls in Gegenwart von Wasser bei einer Temperatur von 20 bis 120°C durchgeführt. Als wasserlösliche organische Lösungsmittel kommen z.B. in Frage: Alkohole wie Methanol;Aethanol,n- oder iso- Propanol oder Butanol, Glykol, Diäthylenglykol, Aethylenglykolmonomethyl-, äthyl- oder -butyläther oder Diäthylenglykolmonomethyläther , oder Ketone wie Aceton und Methyläthylketon.

Die Verbindungen der Formel III sind ebenfalls bekannt, z.B. aus der DOS 2631166. In Frage kommen z.B.:

3-Dimethylaminophenol, 3-Methylaminophenol, 3-Aethylaminophenol, 3-Isopropylaminophenol, 2-Aethylamino - 4 - kresol, 3-Hydroxy-diphenylamin, 3-Hydroxy-(2'-methyl)-diphenylamin, 3-Hydroxy-(4'-methyl)-diphenylamin, 3-Hydroxy-(2',3'-dimethyl)-diphenylamin und 3-Hydroxy-(2',4'-dimethyl)-diphenylamin, sowie 3-Diäthylaminophenol, 3-Hydroxy-N-methyl-diphenylamin, 3-Hydroxy-N-methyl-(2'-methyl)-diphenylamin, 3-Hydroxy-N-methyl- (4'-methyl)-diphenylamin, 3-Hydroxy-N-methyl-(2',3'-dimethyl)- diphenylamin, 3-Hydroxy-N-methyl-(2',4'-dimethyl)-diphenylamin, 3-Hydroxy-N-äthyl-diphenylamin und 3-Hydroxy-N-methyl-(4'-äthyl)-diphenylamin.

Die Kondensation der aus den Aminophenoläthern der Formel II erhaltenen Nitrosoverbindung mit den Verbindungen der Formel III zu den Oxazinverbindungen der Formel I führt primär zu intermediär sich bildenden wasserunlöslichen linearen Metallkomplexen aus dem eingesetzten Schwermetall und dem linearen Kondensationsprodukt aus der vom Aminophenoläther der Formel II erhaltenen Nitrosoverbindung und der Verbindung der Formel III. Diese wasserunlöslichen Metallkomplexe können isoliert werden und entsprechen der mutmasslichen Formel

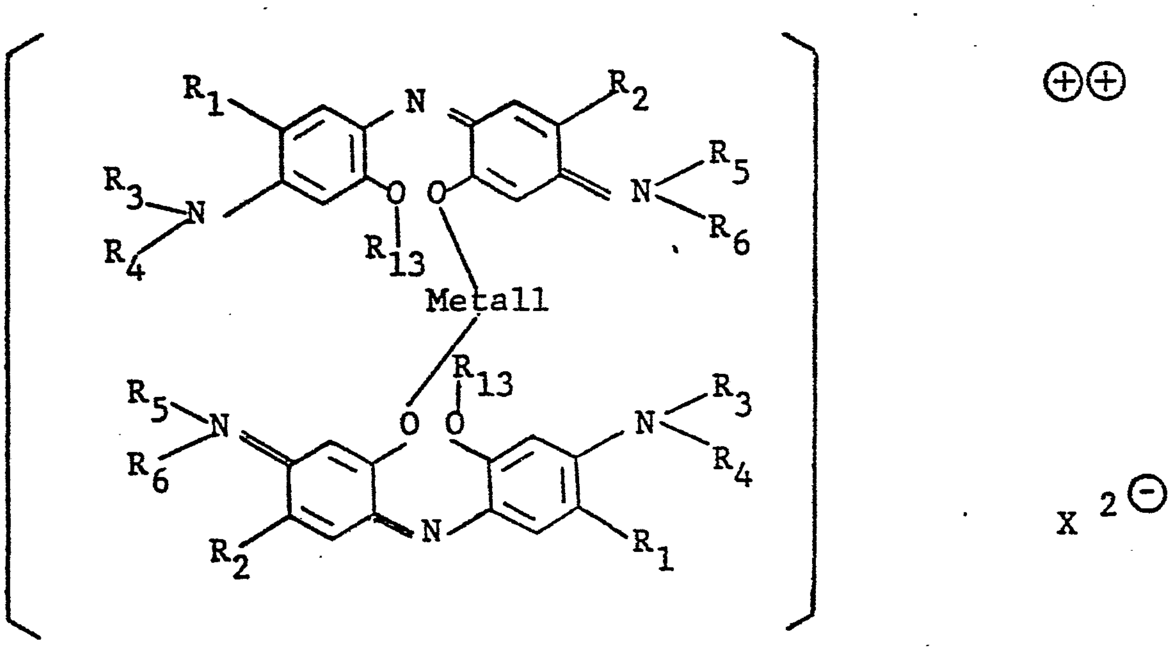

worin X, $R_1$, $R_2$, $R_3$, $R_4$, $R_5$ und $R_6$ die unter Formel I angegebene Bedeutung haben, $R_{13}$ die Gruppierung- $(CH_2-CH.R_7-O)_n-H$ darstellt worin $R_7$ und n die unter Formel II angegebene Bedeutung besitzen und Metall das eingesetzte Schwermetallatom bedeutet.

Nach der Kondensationsreaktion können die wasserunlöslichen Metallkomplexe vom Reaktionsmedium getrennt und getrocknet werden. Die Metallkomplexe werden in wasserlösliche Oxazinsalze umgewandelt, indem man diese in neutralem bis alkalischem Medium erwärmt, das z.B. als Hydroxyd ausgefallene Metallsalz entfernt und das Oxazinsalz mit dem gewünschten Anion X ausfällt und isoliert.

Bevorzugt ist die Verfahrensweise worin die Oxazinverbindungen der Formel I ohne Isolation der Nitrosoverbindung, aber mit Isolation der wasserunlöslichen Metallkomplexe hergestellt werden.

Man erhält nach dem erfindungsgemässen Verfahren farbstarke kationische Oxazinverbindungen von guter Reinheit und Ausbeute welche eine hohe Lichtechtheit auf Polyacrylnitrilmaterialien aufweisen.

Die Erfindung betrifft desweiteren noch neue Oxazinverbindungen der Formel

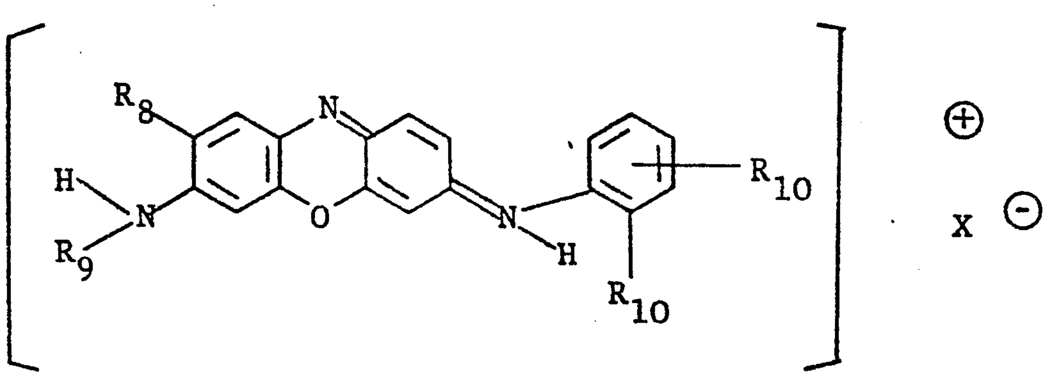

worin bedeuten:

$R_8$ : H, $CH_3$ oder $C_2H_5$ ,

$R_9$ und $R_{10}$ unabhängig voneinander eine unsubstituierte Alkylgruppe mit 1 bis 4 Kohlenstoffatomen, und

X ein Anion, bzw. Oxazinverbindungen der Formel:

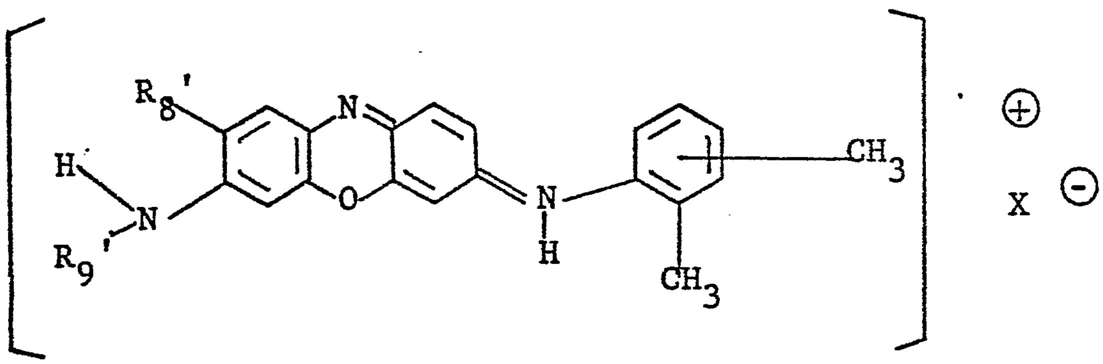

worin bedeuten:

$R_8'$ : H oder $CH_3$

$R_9'$ : $CH_3$ oder $C_2H_5$, und

X ein Anion, und Oxazinverbindungen der Formel:

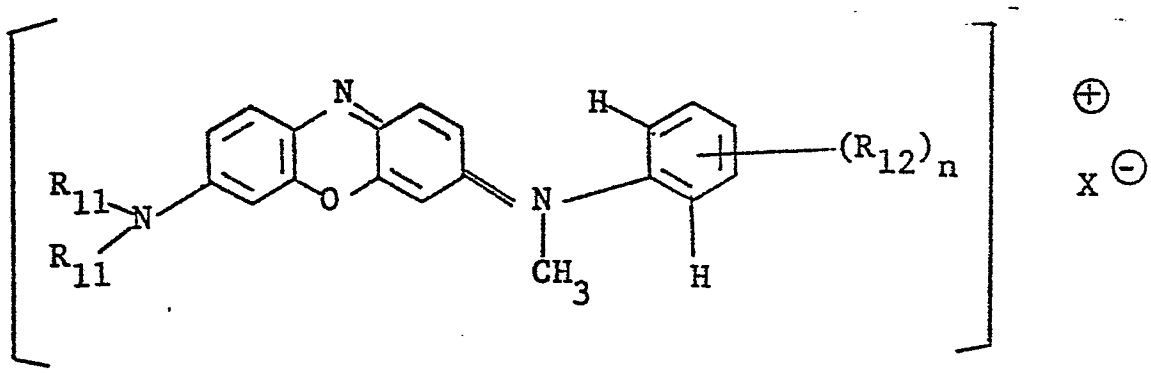

worin bedeuten:

$R_{11}$ und $R_{12}$ unabhängig voneinander je eine Alkylgruppe mit 1 bis 4 Kohlenstoffatomen, insbesondere die Methyl- oder Aethylgruppe,

n : 1, 2 oder 3 und

X : ein Anion.

Verwendung finden die gemäss dem erfindungsgemässen Verfahren erhaltenen Oxazinverbindungen bzw. neuen Oxazinverbindungen als Farbstoffe zum Färben und unter Zusatz von Bindemitteln zum Bedrucken von mit kationischen Farbstoffen anfärbbaren Materialien, insbesondere Textilmaterialien, die z.B. vorteilhaft aus Homo- oder Mischpolymerisaten des Acrylnitrils bestehen, oder synthetische Polyamide oder Polyester, welche durch saure Gruppen modifiziert sind. Desweiteren dienen die Oxazinverbindungen auch zum Färben von Nasskabel und Kunststoffmassen, sowie Leder und Papier. Man färbt vorzugsweise aus wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware, wie Hemden und Pullover.

Die erfindungsgemäss erhaltenen bzw. neuen kationischen Oxazinverbindungen lassen sich auch Spinnlösungen zur Herstellung polyacrylnitrilhaltiger Fasern zusetzen oder auf die unverstreckte Faser aufbringen.

Durch die Applikation der Oxazinverbindungen auf textilen Polyacrylnitrilmaterialien lassen sich sehr egale blaue Färbungen bzw. Drucke herstellen, die sich durch sehr gute Licht-, Dekatur-, Dämpf-, Wasch- und Schweissechtheit auszeichnen.

Diejenigen Oxazinverbindungen, welche eine gute Löslichkeit in organischen Lösungsmitteln, wie z.B. Perchloräthylen, besitzen, sind auch zum Färben der genannten Textilmaterialien oder zum Färben von z.B. plastischen Massen aus organischen Medien geeignet.

Die folgenden Beispiele veranschaulichen die Erfindung ohne sie darauf zu limitieren. Teile bedeuten, sofern nichts anderes angegeben ist Gewichtsteile, die Prozente Gewichtsprozente und die Temperaturen sind in Celsiusgraden angegeben.

Beispiel 1

16,5 Teile 3 - Diäthylaminophenol werden in 10 Teilen wässeriger Natronlauge 1 N bei 65° innert 40 Minuten mit 8 Teilen Aethylenoxid versetzt. Der entstandene Aether der Formel

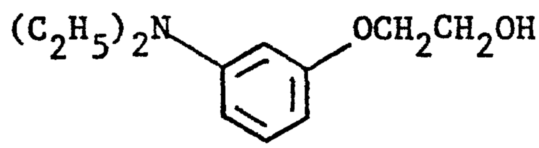

wird mit 20 Teilen wässeriger Salzsäure 30% und 20 Teilen Methanol gelöst und bei 20 - 25° durch Zutropfen einer wässerigen Lösung von 6,9 Teilen Natriumnitrit nitrosiert. Die so erhaltene Nitrosolösung wird ohne Isolation der Nitrosoverbindung mit Natriumbicarbonat auf einen pH-Wert von 3 - 4 gestellt und dann innert 1 Stunde auf eine 70 - 75° warme Mischung von 16 Teilen 3 - Diäthylaminophenol, 14 Teilen Zinkchlorid und 6 Teilen Natriumbicarbonat in 40 Teilen Methanol getropft. Das Reaktions-Produkt kristallisiert als linearer, wasserunlöslicher Metallkomplex, wird aber ohne Isolation bei 50° mit 60 Teilen wässeriger Natriumcarbonatlösung 15% versetzt, wobei das wasserlösliche Farbsalz entsteht. Durch Zutropfen von 46 Teilen wässeriger Salzsäure 30% fallen 32,2 Teile der Oxazinverbindung der Formel

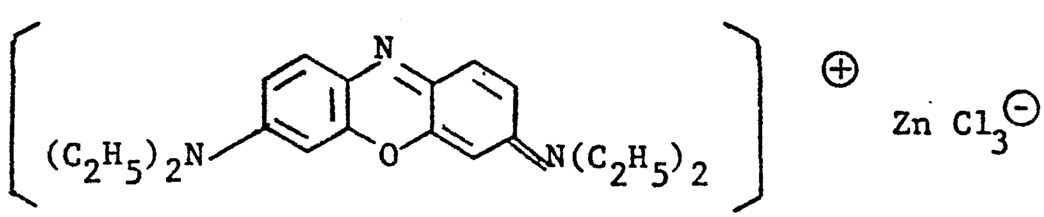

in hoher Reinheit aus, welche durch Filtration leicht isoliert werden können. Die genannte Oxazinverbindung färbt Polyacrylnitrilfasern in grünstichig blauen Tönen.

Beispiel 2

27,5 Teile der Verbindung der Formel

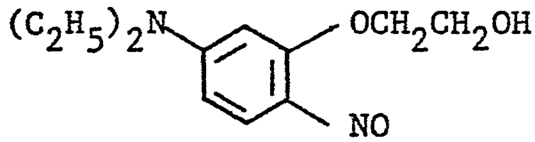

. HCl

werden innert 1 Stunde bei 80° zu einer Mischung von 16,5 Teilen 3 - Diäthylaminophenol, 20 Teilen Zinkchlorid und 4 Teilen Zinkoxid in 75 Teilen Methanol eingetragen. Das Reaktionsprodukt fällt als wasserunlöslicher Metallkomplex aus und wird bei 20° abfiltriert. Nach dem Trocknen erhält man 44 g eines sehr reinen Metallkomplexes, der wie folgt in ein wasserlösliches Oxazinfarbsalz umgewandelt werden kann:

20 Teile des erhaltenen linearen Metallkomplexes werden in 30 Teilen einer 15 %igen wässerigen Natriumcarbonatlösung und 70 Teilen Wasser während 1 Stunde bei 60° gehalten. Man filtriert bei 20° vom Niederschlag (Zinkcarbonat) ab, stellt das Filtrat mit wenig Salpetersäure auf einen pH-Wert von 4 und fällt durch Zugabe von Natriumnitrat das Farbsalz, filtriert und trocknet. Man erhält 12,1 Teile des sehr gut wasserlöslichen Oxazinfarbsalzes gemäss Beispiel 1 von hoher Reinheit.

Die als Ausgangssubstanz eingesetzte Nitrosoverbindung wird wie folgt erhalten:

209 Teile der Verbindung der Formel

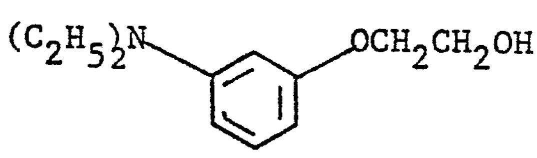

werden in Wasser mit 200 Teilen 30 %iger Salzsäure gelöst; Volumen 700 ml. Bei 20 - 25° tropft man innert 20 Minuten eine 40 %ige Lösung aus 69 Teilen Natriumnitrit in Wasser zu. Das Produkt der Formel

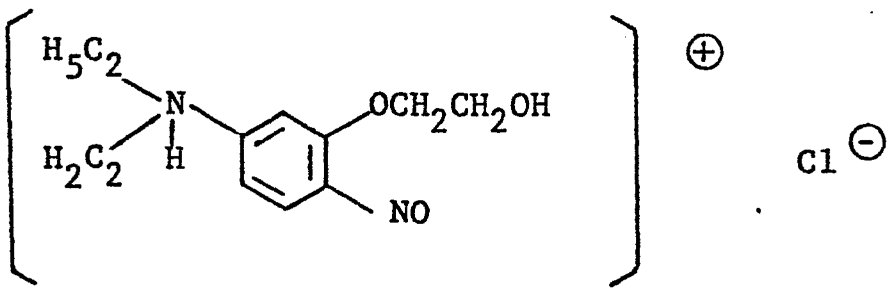

fällt aus, wird mit 200 Teilen einer 15 %igen Kochsalzlösung versetzt, abfiltriert und bei 60° im Vakuum getrocknet.

## Beispiel 3

27,5 Teile der Verbindung der Formel

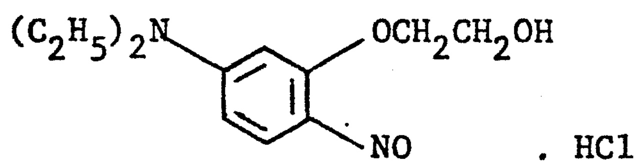

werden innert 1 Stunde zu einer Mischung von 19,9 Teilen 3 - Hydroxy - N -methyl-diphenylamin, 20 Teilen Zinkchlorid und 4 Teilen Zinkoxid in 150 Teilen Methanol bei 65° eingetragen. Man hält noch 1 Stunde bei 65°, lässt abkühlen und filtriert bei 20° den kristallinen, linearen Zn-Komplex ab. Nach dem Trocknen im Vakuum bei 60° erhält man 35 Teile eines sehr reinen Metallkomplexes, welcher sich schon im kochenden Wasser zur wasserlöslichen Oxazinverbindung der Formel

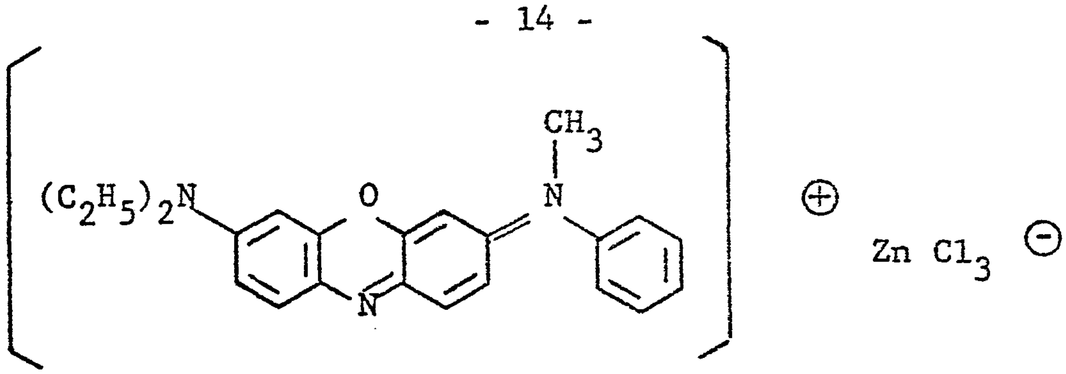

umwandelt. Das Oxazinfarbsalz färbt Polyacrylnitril-Fasern grünstichig blau und die Färbung weist sehr gute Echtheiten, vor allem eine sehr hohe Lichtechtheit auf.

Verfährt man analog den Angaben gemäss Beispiel 3 bei entsprechender Abwandlung der Ausgangsmaterialien, so erhält man die in der Tabelle 1 aufgeführten Oxazin-Verbindungen der Formel :

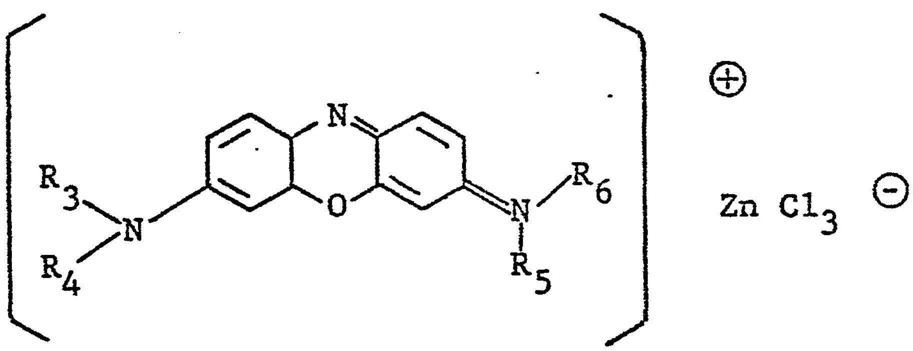

Tabelle 1

| Beispiel Nr. | $R_3$ | $R_4$ | $R_5$ | $R_6$= 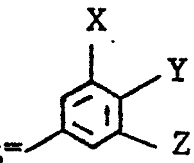 | | | Farbton auf Polyacrylnitril |
|---|---|---|---|---|---|---|---|
| | | | | X | Y | Z | |
| 4 | $CH_3$ | $CH_3$ | $CH_3$ | H | H | H | grünstichig blau |
| 5 | $C_2H_5$ | $C_2H_5$ | " | $CH_3$ | H | H | " |
| 6 | " | " | " | " | $CH_3$ | H | " |
| 7 | " | " | " | H | $CH_3$ | H | " |
| 8 | " | " | " | $CH_3$ | H | $CH_3$ | " |
| 9 | " | " | $C_2H_5$ | H | H | H | " |
| 10 | " | " | $CH_3$ | H | $C_2H_5$ | H | " |
| 11 | " | " | " | H | $OC_2H_5$ | H | " |

Beispiel 12

32,3 Teile der Verbindung der Formel

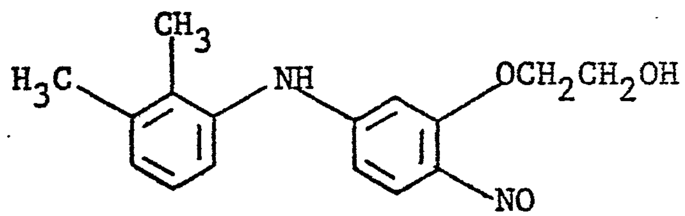

. HCl

werden innert 2 Stunden zu einer unter Stickstoff rührenden Mischung von 15,1 Teilen 2 - Aethylamino-4-kresol, 20 Teilen Zinkchlorid und 4 Teilen Zinkoxid in 150 Teilen 95 %igem Aethanol von 75 - 80° eingetragen. Nach einer weiteren Stunde bei 75 - 80° wird auf 20° gekühlt und der kristalline Zink-Komplex abfiltriert. Nach dem Trocknen erhält man 47 Teile eines reinen, wasserunlöslichen Zinkkomplexes, welcher nach folgenden Methoden zum wasserlöslichen Oxazin-Farbsalz umgewandelt werden kann:

a) 5 Teile des Zinkkomplexes werden in 40 Teilen Methylaethylketon und 20 Teilen 1 N Natronlauge während 1 Stunde bei 70 - 75° gehalten. Durch Filtration wird das ausgefallene Zinkhydroxid entfernt, das geklärte Filtrat in 200 Teilen 1 N Essigsäure aufgenommen und durch Zugabe von wenig Toluol oder Cyclohexan vom Methylaethylketon getrennt. Die wässrige Farbstoffphase wird auf eine Mischung von Eis und Kochsalz getropft, wobei das Oxazinfarbsalz der Formel

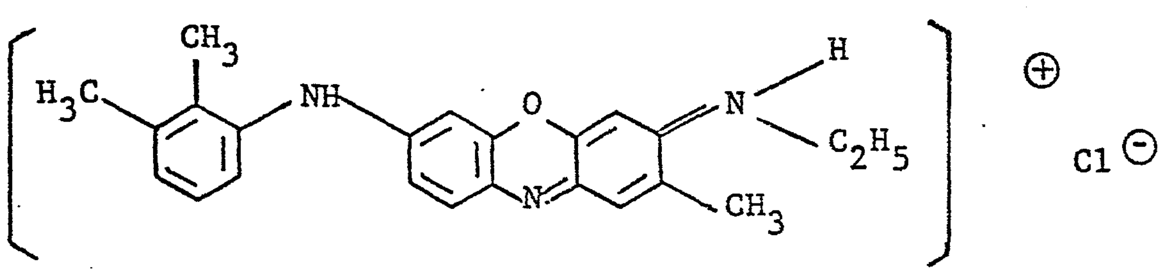

kristallin ausfällt und filtriert werden kann.

b) 5 Teile des Zink-Komplexes werden in 100 Teilen Toluol und 100 Teilen Natronlauge 1 N während 1 Stunde bei 85° gehalten. Dabei geht der gebildete Farbstoff in deprotonierter Form im Toluol in Lösung und wird von der wässrigen, Zink-hydroxid enthaltenden Phase getrennt. Das Toluol wird abdestilliert und der Rückstand in Essigsäure gelöst. Die Farbsalzlösung der Formel

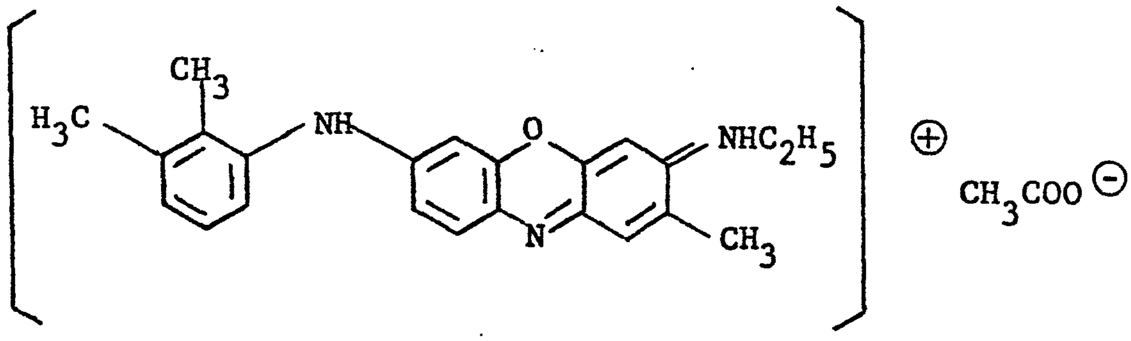

kann direkt zum Färben von Polyacrylnitril-Fasern verwendet werden und ergibt ein reines Blau mit sehr guten Echtheiten.

Auf analoge Art und Weise wie im Beispiel 12 a erhält man beim Einsatz der entsprechenden Ausgangsmaterialien die in Tabelle 2 aufgeführten Oxazin-Farbstoffe der Formel :

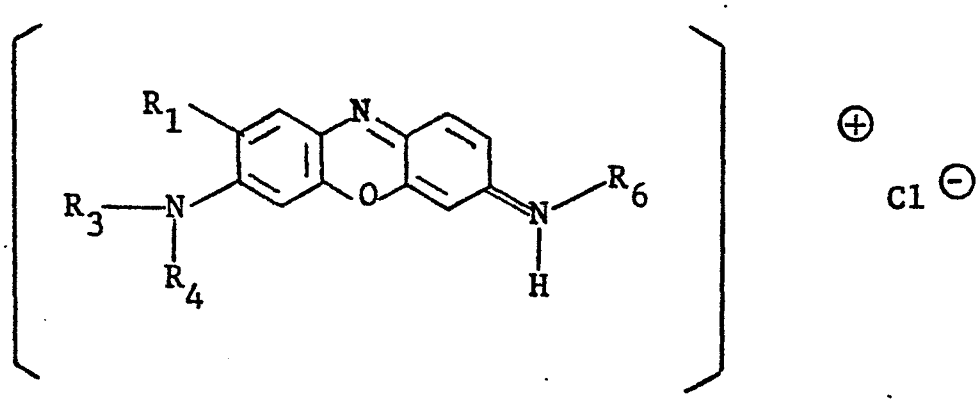

Tabelle 2

| Beispiel Nr. | $R_1$ | $R_4$ | $R_3$ | $R_6$ = 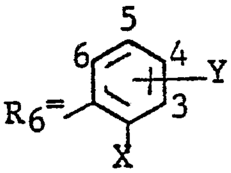 | | Farbton auf Polyacrylnitril |
|---|---|---|---|---|---|---|
| | | | | X | Y | |
| 13 | H | $CH_3$ | H | $CH_3$ | 3-$CH_3$ | blau |
| 14 | H | $C_2H_5$ | H | $CH_3$ | 3-$CH_3$ | " |
| 15 | H | $(CH_3)_2CH$ | H | $CH_3$ | 3-$CH_3$ | " |
| 16 | $CH_3$ | $C_2H_5$ | H | $CH_3$ | 4-$CH_3$ | " |
| 17 | $CH_3$ | $C_2H_5$ | H | $CH_3$ | 5-$CH_3$ | " |
| 18 | $CH_3$ | $C_2H_5$ | H | $CH_3$ | 6-$CH_3$ | " |
| 19 | H | $CH_3$ | $CH_3$ | H | H | " |
| 20 | H | $C_2H_5$ | $C_2H_5$ | H | H | " |
| 21 | H | $C_2H_5$ | $C_2H_5$ | $CH_3$ | 3-$CH_3$ | " |
| 22 | H | $C_2H_5$ | $C_2H_5$ | $CH_3$ | 4-$CH_3$ | " |
| 23 | H | $C_2H_5$ | $C_2H_5$ | H | 4-$CH_3$ | " |
| 24 | H | $C_2H_5$ | $C_2H_5$ | H | 4-$OC_2H_5$ | " |
| 25 | $CH_3$ | $C_2H_5$ | H | $CH_3$ | 5-Cl | " |
| 26 | $CH_3$ | H | H | H | H | " |

Beispiel 27

19,9 Teile 3-Hydroxy-N-methyl-diphenylamin werden in 50 Teilen Dimethylformamid und 5 Teilen Natronlauge I N gelöst. Während 2 Stunden werden bei 70 - 75° 10 Teile Aethylenoxid eingeleitet. Nach 4 Stunden bei 75° ist die Reaktion beendet; man giesst auf Wasser, extrahiert mit Essigester und erhält nach Entfernung des Lösungsmittels 28 Teile 3-(β-Hydroxyäthoxy) - N - methyl-diphenylamin, welche in 150 Teilen Aethanol 95 % und 26 Teilen einer 36 %igen Salzsäure gelöst, werden. Bei 5° lässt man innert ½ Stunde eine wässrige Lösung von 6,9 Teilen Natriumnitrit zutropfen, wobei die Nitrosoverbindung teilweise als Hydrochlorid ausfällt. Man puffert durch Zugabe von 16 Teilen Zinkoxid, wobei die Nitrosoverbindung bei Raumtemperatur in Lösung geht, gibt 12,8 Teile 2-Aetylamino-4-kresol zu und erwärmt kurz auf 50°. Der lineare Zink-Komplex fällt kristallin aus und wird abfiltriert, mit etwas Aethanol und Wasser gewaschen und getrocknet. Man erhält 33,6 Teile eines wasserunlöslichen Komplexes, welcher analog der Methode im Beispiel 12 a), aber anstelle von 1 N Natronlauge mit 7,5 %iger Sodalösung, zum wasserlöslichen Oxazin-Farbsalz der Formel

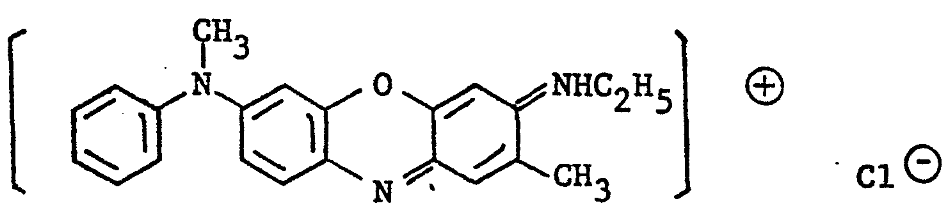

umgewandelt werden kann. Mit diesem Farbstoff erhält man sehr reine und echte Blautöne auf Polyacrylnitril-Fasern.

Beispiel 28

5 g der gemäss Beispiel 1 hergestellten Oxazin-Verbindung werden mit 2 g 40 %iger Essigsäure angeteigt und durch Zugabe von 4000g heissem Wasser in Lösung gebracht. Man setzt noch 1 g Natriumacetat und 2 g eines mit Dimethylsulfat quaternierten Anlagerungsproduktes von 15 bis 20 Aequivalenten Aethylenoxyd an N-Octadecyldiäthylentriamin zu und geht mit 100 g Polyacrylnitrilgewebe bei 60° ein. Innerhalb 30 Minuten erhitzt man das Bad auf 100° und färbt dann kochend während 90 Minuten. Hierauf lässt man die Flotte im Verlauf von 30 Minuten bis auf 60° abkühlen. Das so gefärbte Material wird dann herausgenommen und anschliessend mit lauwarmem und kaltem Wasser gespült.

Man erhält eine reine, grünstichig blaue Polyacrylnitrilfärbung.

## Patentansprüche

1. Verfahren zur Herstellung von kationischen Oxazinverbindüngen der Formel I

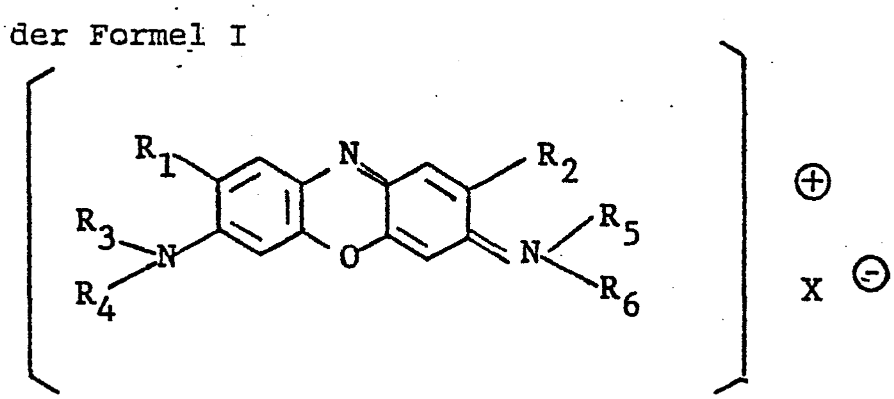

(I)

worin bedeutet:

$R_1$ und $R_2$ unabhängig voneinander Wasserstoff, eine Alkylgruppe mit 1 bis 4 Kohlenstoffatomen oder eine Alkoxygruppe mit 1 bis 4 Kohlenstoffatomen;

$R_3$ und $R_5$ unabhängig voneinander Wasserstoff, eine Alkylgruppe mit 1 bis 4 Kohlenstoffatomen, die gegebenenfalls substituiert ist durch CN, OH, Aryl, Halogen oder eine Alkoxygruppe, eine Alkenylgruppe mit 2 bis 4 Kohlenstoffatomen;

$R_4$ und $R_6$ unabhängig voneinander eine Alkylgruppe mit 1 bis 4 Kohlenstoffatomen, die gegebenenfalls substituiert ist durch CN, OH, Aryl, Halogen oder eine Alkoxygruppe, oder eine Alkenylgruppe mit 2 bis 4 Kohlenstoffatomen; oder eine unsubstituierte Phenylgruppe oder eine Phenylgruppe die ein- oder mehrmals substituiert ist durch eine Alkylgruppe mit 1 bis 4 Kohlenstoffatomen, eine Alkoxygruppe mit 1 bis 4 Kohlenstoffatomen oder Halogen, und

X ein Anion,

dadurch gekennzeichnet, dass man eine Verbindung der Formel II

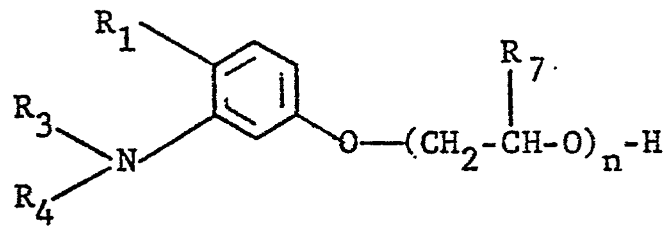

(II)

worin die Symbole $R_1$, $R_3$ und $R_4$ die unter Formel I angegebene Bedeutung haben und $R_7$ Wasserstoff, den Methyl- oder Aethylrest und n die Zahlen 1 oder 2 bedeutet in Gegenwart einer Säure HX nitrosiert, das Nitrosierungsprodukt gegebenenfalls isoliert und anschliessend mit einer Verbindung der Formel III

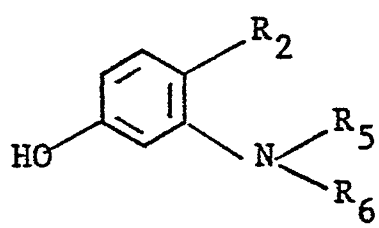

(III)

worin die Symbole $R_2$, $R_5$ und $R_6$ die unter Formel I angegebene Bedeutung haben in Gegenwart von Schwermetallsalzen gegebenenfalls in Mischung mit einem basischen Metallsalz, kondensiert.

2. Verfahren gemäss Anspruch 1 dadurch gekennzeichnet, dass die Kondensation des Nitrosierungsproduktes mit der Verbindung der Formel III in Gegenwart von Metallsalzmischungen aus einem Schwermetallsalz und basischem Metallsalz in einem organischen Lösungsmittel, welches mit Wasser mischbar ist, und gegebenfalls Wasser, durchgeführt wird.

3. Verfahren gemäss Anspruch 2 dadurch gekennzeichnet, dass man als Schwermetallsalze Zinksalze oder Eisensalze verwendet.

4. Verfahren gemäss Anspruch 2 dadurch gekennzeichnet, dass man als basische Metallsalze Alkali- oder Erdalkalisalze verwendet.

5. Verfahren gemäss Anspruch 4 dadurch gekennzeichnet, dass man als basische Metallsalze Natrium- oder Kaliumsalze verwendet.

6. Verfahren gemäss Anspruch 2 dadurch gekennzeichnet, dass man als Metallsalzmischung Zinkchlorid und ein basisches Natrium- oder Kaliumsalz verwendet.

7. Verfahren gemäss Anspruch 3 und 6 dadurch gekennzeichnet, dass man als Metallsalzmischung Zinkchlorid und Zinkoxid oder Zinkchlorid und Natriumcarbonat verwendet.

8. Verfahren gemäss den Ansprüchen 2 bis 7 dadurch gekennzeichnet, dass man als organische Lösungsmittel Alkohole verwendet.

9. Verfahren gemäss Anspruch 8 dadurch gekennzeichnet, dass man als Alkohole einwertige Alkohole wie Methanol oder Aethanol oder zweiwertige Alkohole wie Glykol verwendet.

10. Verfahren gemäss den Ansprüchen 1 bis 9 dadurch gekennzeichnet, dass die Herstellung der Oxazinverbindungen ohne Isolation der Nitrosoverbindung durchgeführt wird.

11. Die gemäss dem Verfahren des Anspruchs 1 erhaltenen Oxazinverbindungen.

12. Verwendung der Oxazinverbindungen gemäss Anspruch 10 als Farbstoffe zum Färben oder Bedrucken von mit kationischen Farbstoffen färbbaren Materialien, insbesondere textile Polyacrylnitrilmaterialien.

13. Die Oxazinverbindungen der Formel

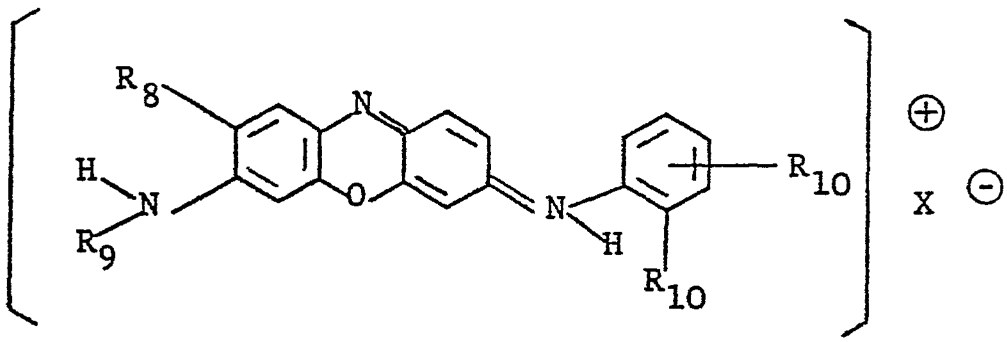

worin bedeuten:

$R_8$ : H, $CH_3$ oder $C_2H_5$ ,

$R_9$ und $R_{10}$ unabhängig voneinander eine unsubstituierte Alkylgruppe mit 1 bis 4 Kohlenstoffatomen, und

X ein Anion.

14. Die Oxazinverbindungen der Formel

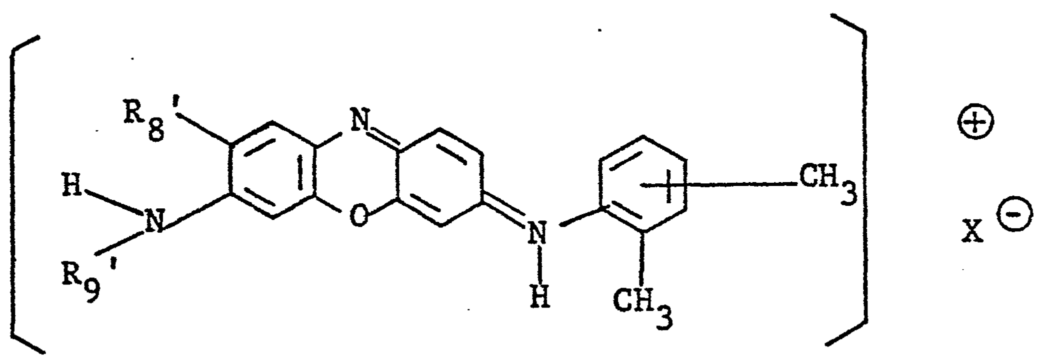

worin bedeuten:

$R_{8'}$ : H oder $CH_3$

$R_{9'}$ : $CH_3$ oder $C_2H_5$, und

X ein Anion.

15. Die Oxazinverbindungen der Formel

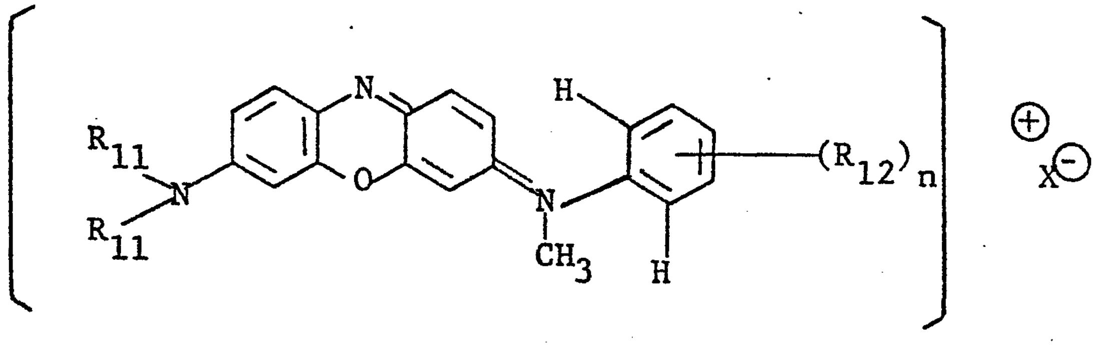

worin bedeuten:

$R_{11}$ und $R_{12}$ unabhängig voneinander je eine Alkylgruppe mit 1 bis 4 Kohlenstoffatomen,

n : 1, 2 oder 3 und

X : ein Anion.

16. Oxazinverbindungengemäss Anspruch 15 dadurch gekennzeichnet, dass $R_{11}$ und $R_{12}$ unabhängig voneinander $CH_3$ oder $C_2H_5$ bedeuten.